# EUROPEAN PATENT SPECIFICATION

(11) **EP 1 609 587 B1**
(45) Date of publication and mention of the grant of the patent: **03.12.2008**
(21) Application number: 04405388.2
(22) Date of filing: 22.06.2004
(51) Int. Cl.: B31F 1/07, B29C 59/04

(54) **Device for the embossing and satining of flat materials**
Vorrichtung zum Satinieren und Prägen von flachem Material
Dispositif pour glacer et gaufrer des matériaux plats

(43) Date of publication of application: 28.12.2005
(73) Proprietor: Boegli-Gravures S.A., CH-2074 Marin (CH)
(72) Inventor: Boegli, Charles, 2074 Marin-Epagnier (CH)
(74) Representative: Munk, Ludwig

(56) References cited:
- DE-A- 10 043 989
- US-B1- 6 176 819
- US-B1- 6 458 447

## Description

The present invention refers to a device for the embossing and satining of innerliners according to the preamble of claim 1.

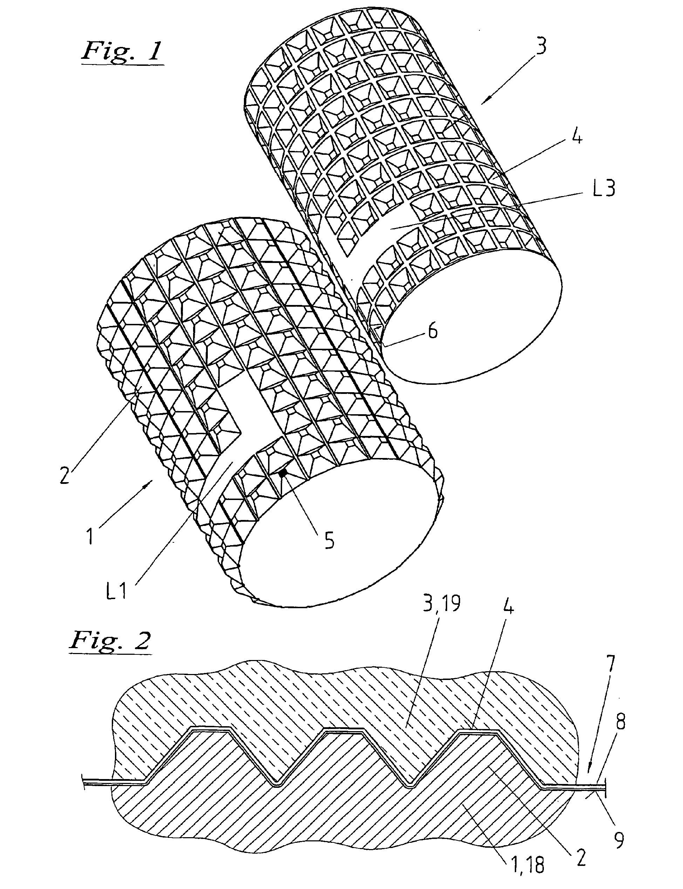

Production of innerliners with logos using rolls providing embossing and satining with a pin up - pin down configuration, e.g. according to Figure 1, is known and has the advantage of enabling to produce sharp and correct logos. The term "logo" encompasses all signs, decorative elements and/or identification marks embossed on an innerliner, and the term "innerliner" encompasses all kind of foils comprising laminated sheets of aluminum, paper or plastic material sheets which in general are provided with sputtered metal or a film of metal, in particular aluminum. Such innerliners are used for tobacco products like cigarettes, food products like chocolate, butter, or chewing gum, or pharmaceutical products like pills or other drugs.

Prior art embossing rolls have three different zones, namely the satining zone, the logo embossing zone where the metallized part of the innerliner is not satined and remains glossy, whereby this part can be left as such or be worked, and the adjustment zone. According to the quality of the innerliners, the requested precision of the embossing and satining and embossing speed the rolls are supported in expensive bearings and frames. The wear of the rolls and the change of the logo compel to stop the production process, to dismount the relatively heavy housing, to exchange and readjust the rolls and to start anew the embossing process.

The prior art pin up - pin down rolls with a logo are produced in pairs, wherein e.g. first the pin up roll, which is the driving roll, is produced and the logo manufactured thereon. Normally the roll is hardened and is employed for forming the counter roll, that is e.g. the pin down roll. This roll is the exact counter part of the first roll, see Figure 1. This means that
a) in the case different logos are to be embossed, different pairs of rolls must be produced, and
b) in the case one of the rolls is worn, both rolls must be exchanged, even if one roll might have less wear than the other roll.

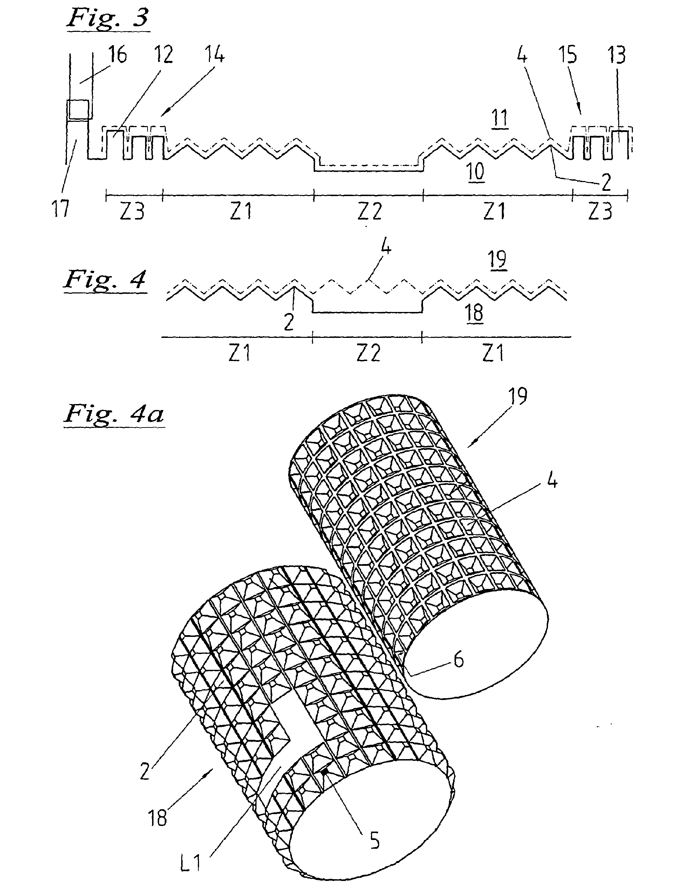

For the prior art logo embossing method using a pin up - pin down configuration, e.g. according to Figure 3, both rolls must be provided with one or several adjusting means since the logo part at the pin down roll is raised relative to the bottoms of the recesses, so that the matching of this logo part with the logo part on the other roll is very critical. Therefore, the rolls might be provided with different kind of further coarser teeth or rings for the adjustment in the mounting phase, that means before beginning of the operation, together with a synchronizing gear which must be adjusted or aligned also.

In consequence, the production of the pairs of rolls is very cost intensive enhanced by the fact that the rolls must be exchanged by pairs and that each change of the logo means the exchange of the pair of rolls.

Document US 2004/011107 A4 shows a device for embossing and satining of innerliners with shadow embossed signs. The teeth at a position corresponding to the shadow embossed sign on one roll are flattened, whereas the teeth on the other roll on the position corresponding to the shadow embossed sign remain unchanged. Such signs produce a shadow-like effect, where the intensity of such signs embossed within the satined background vary with the viewing angle of the observer. For synchronisation purposes, also a pin-up pin-down configuration of the two rolls is possible.

Based on this prior art, it is a first object of the invention to provide for a device for satining and embossing innerliners using the pin up - pin down configuration with much lower production costs of the rolls, where it is not necessary to produce the rolls in pairs and therefore there is no need to replace both rolls together, be it for reasons of wear or for changing the logo. This object is attained with a device according to claim 1.

It is a second object of this invention to provide for a satining and embossing device with a pin up - pin down configuration with enhanced logo embossing capacity. This object is attained with a satining and embossing device according to claim 3.

The invention will be explained with reference to the accompanying drawings of embodiments thereof.
- Figure 1 to: shows a portion of a prior art pin up roll and a pin down roll, each with a part of the logo be embossed,
- Figure 2: shows an enlarged section of the engaged rolls of Figure 1,
- Figure 3: shows schematically a section of two engaged rolls of the prior art with adjustment means and the parts for the logo embossing,
- Figure 4: shows schematically a section of two engaged rolls according to the invention with the logo part on one roll and the unaltered logo area on the other roll for the logo embossing,
- Figure 4A: shows a portion of a pin up roll and a pin down roll according to the invention, one roll having a part bearing the logo to be embossed and the other roll having an unaltered logo area,
- Figures 5-8: show four variants of the solution according to Figure 4 of the part and area for the logo embossing, and
- Figures 9-11: show further variants to the embodiment of Figure 4.

Figure 1 shows a portion of a pin up roll 1 with individual teeth 2, which in this case are pyramidal with a flattened top, and a portion of a prior art pin down roll 3 with recesses 4 corresponding to the teeth 2. One tooth 2 matches one recess 4 respectively. Rolls 1 and 3 show further the two parts L1, resp. L3 for embossing a logo in the form of a "L" according to the prior art. The arrows 5, 6 point to a marking for easier mutual adjustment of the rolls and the logo zone when mounting them.

Figure 2 shows the meshing of the teeth 2 with the recesses 4 and the innerliner 7 between, the innerliner being composed of a paper substrate 8 and a metallic film 9, which can be aluminum. In the portion shown in Figure 2 the innerliner is satined.

In the Figures 3 - 8, except Figure 4A, the teeth are shown only schematically, meaning that they can have any shape, for example four sided pyramidal, cone shaped etc. The pin up roll with the outstanding teeth is always shown at the bottom, whereas the pin down roll with the corresponding recesses is therefore shown on the top.

Figure 3 shows a prior art pair of embossing rolls in the pin up - pin down configuration with the mentioned three zones, which zones are located complementary at the pin up roll 10 and at the pin down roll 11. Each of the rolls may be the driving roll, depending on which side the machine drive is provided.

Zone Z1 is the pin up - pin down satining zone, where the teeth and recesses are unaltered. Zone Z2 defines the logo zone, meaning in Figure 3 the logo parts where the logo has been engraved or otherwise manufactured on both rolls, or in Figures 4 - 8, the logo part on one roll where the logo has been engraved or otherwise manufactured and the corresponding logo area on the other roll, where the shape of the teeth has not been altered.

Zone Z3 defines the zone with the adjustment means and comprises in general an adjustment ring 12, 13 either on one or on both ends of the rolls and adjustment teeth 14, 15, which are coarser teeth than for satining. The rolls are first adjusted in the mounting phase with the aid of the adjustment ring(s) and then with the aid of the adjustment teeth. Both adjustment means allow the precise adjustment of the two matching logo parts before operation.

According to Figure 3 the pin down roll 11 is synchronized with the driving roll 10 by gearwheels 16 and 17, representing synchronizing means including other synchronizing elements which are known per se.

According to a new method of producing a pin down roll made of relatively soft material like rubber or temperature stable plastic material, the hardened pin up roll is pressed upon the roll to become the pin down roll until the recesses are formed. The further use of such pin down rolls is the same as for metal pin down rolls. This method can also be inverted in that a hardened pin down roll is pressed against a roll of relatively soft material like rubber or temperature stable plastic material until the outstanding pin up teeth are formed on the now pin up roll. The further use of such pin up rolls is the same as for metal pin up rolls.

Figures 4 and 4A show a first embodiment of the invention. The driving pin up roll 18 and pin down roll 19 comprise the two zones Z1 and Z2, whereby pin down roll 19 is provided with unaltered recesses 4 only. It follows from the embodiment of Figures 4 and 4A that it is possible to emboss logos in the pin up - pin down configuration with the driving roll only having the logo in zone 2, whereas the counter roll, driven by the other roll, has only the unaltered recesses 4.

The inverse case is also possible, wherein only the pin down roll, which can be the driving one, has the logo zone, whereby the counter roll is the pin up roll having unaltered teeth only.

For producing the rolls it is advantageous to produce two pin up rolls, one of it serving as master roll for forming pin down rolls, whose recesses are not altered in the form, and to work on the second pin up roll the parts for forming the logo.

In the embodiment of Figure 4 the rolls have no adjustment zone Z3 and there are no synchronizing gearwheels or other synchronizing means. This has the consequence that
a) the production of the rolls is much simplified in that only one roll has the logo and the counter roll only recesses or teeth with an unaltered shape, and therefore no matching paired production of the rolls is needed,
b) the rolls need no adjustment zone Z3 with the adjustment teeth and the adjustment rings,
c) only the worn roll must be exchanged, not the pair of rolls,
d) it is possible to design a series of rolls with different logos, so that these logo rolls can easily be exchanged, while the counter roll remains unexchanged.

The easy exchange of rolls, in pairs or one roll alone, can be effectuated with the means according to US-A-6 665 998 to the same applicant.

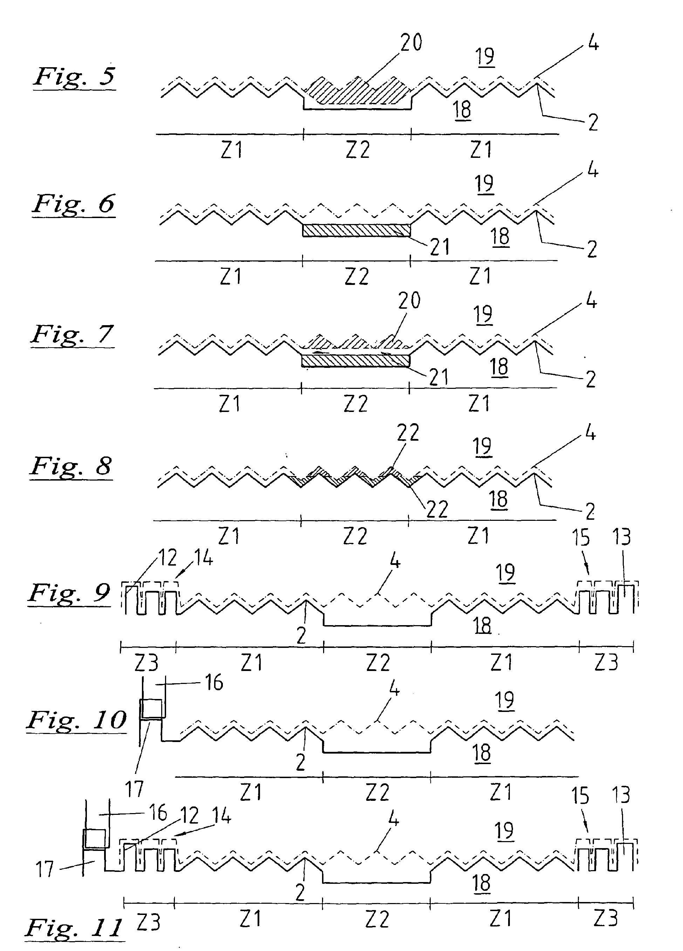

The Figures 5 - 8 show variants of the embodiment of Figure 4 for embossing special effects. If special effects are desired, it is possible to either enhance the appearance of the logo by adding a pressure on the area of the logo and/or to work the surface of the logo for adding effects on its non-satined surface like decorations or identification marks like holograms or an appearance which changes with the viewing angle, and many other aspects.

In Figure 5 a metallic layer 20 has been applied on the logo area of the counter roll 19, which layer has been applied for example by CVD, sputtering or other means and which can have a non-worked or a worked surface with decorations or identifying means marks.

In Figure 6, a metallic layer 21, similar to metallic layer 20, has been applied on the logo on the pin up roll 18, resp. driving roll, and in Figure 7 a metallic layer 20, 21 is applied on the logo on one roll as well as on the logo area of the other roll. In Figure 8 a metallic layer 22 is applied on some of the teeth and recesses of zone Z1, outside the logo zone Z2, for embossing there a mark. By these coating treatments, the shape of the recesses or of the teeth is not altered, only a thin metallic layer is added thereon.

It is of course possible, for certain applications, to utilize one or the other or both of the adjustment means of zone Z3, see Figure 9, as well as the synchronizing gearwheels or any other synchronizing means, together with the adjustment means, see Figure 11, or not, see Figure 10. Even in such cases the advantage over the prior art remains that one of the rolls needs no logo part and that it is not necessary to produce the rolls as pairs.

## Claims

1. A device for the satining and embossing of innerliners, in particular for tobacco, food and pharmaceutical products, comprising a roll (18) with a pin up configuration of teeth (2) and a roll (19) with a pin down configuration of corresponding recesses (4), **characterised in that**
on only one of the rolls (18) a part corresponding to a logo has been worked on to form the logo having a non-satined surface, whereas the recesses, respectively the teeth, on the other roll (19) have not been altered in their shape.

2. A device according to claim 1, **characterised in that** both rolls comprise a zone (Z1) with satining teeth, respectively recesses and one of the rolls comprises further a zone (Z2) with the parts for embossing a logo.

3. A device according to claim 1 or 2, **characterised in that** the zone (Z2) with the parts for embossing a logo is provided with the metallic layer (21).

4. A device according to one of claims 1 to 3, **characterised in that** the zone (Z2) with the parts for embossing a logo and the area on the other roll corresponding to the logo is provided with the metallic layer (20, 21).

5. A device according to one of claims 1 to 4, **characterised in that** said zone (Z1) with the teeth and the recesses for satining is partly provided with another metallic layer (22).

6. A device according to one of claims I to 5, **characterised in that** the rolls are provided with adjustment means (12, 13; 14, 15) in the mounting phase.

7. A device according to one of claims 1 to 6, **characterised in that** the rolls are provided with synchronizing means (16, 17).

## Patentansprüche

1. Vorrichtung zum Satinieren und Prägen von Innerlinern, insbesondere für Tabak, Nahrungsmittel und pharmazeutische Erzeugnisse, mit einer Walze (18) mit einer Pin-up-Konfiguration von Zähnen (2) und einer Walze (19) mit einer Pin-down-Konfiguration von entsprechenden Vertiefungen (4), **dadurch gekennzeichnet, dass** nur auf einer der Walzen (18) ein einem Logo entsprechender Abschnitt bearbeitet ist, um das eine nicht-satinierte Oberfläche aufweisende Logo zu formen, wobei die Vertiefungen bzw. die Zähne auf der anderen Walze (19) in ihrer Form nicht verändert worden sind.

2. Vorrichtung nach Anspruch 1, **dadurch gekennzeichnet, dass** beide Walzen eine Zone (Z1) mit satinierenden Zähnen bzw. Vertiefungen aufweisen und eine von den Walzen eine weitere Zone (Z2) mit den Abschnitten zum Prägen eines Logos.

3. Vorrichtung nach Anspruch 1 oder 2, **dadurch gekennzeichnet, dass** die Zone (Z2) mit den Abschnitten zum Prägen eines Logos mit der Metallschicht (21) versehen ist.

4. Vorrichtung nach einem der Ansprüche 1 bis 3, **dadurch gekennzeichnet, dass** die Zone (Z2) mit den Abschnitten zum Prägen eines Logos und der dem Logo entsprechende Bereich auf der anderen Walze mit der Metallschicht (20,21) versehen sind.

5. Vorrichtung nach einem der Ansprüche 1 bis 4, **dadurch gekennzeichnet, dass** die Zone (Z1) mit den Zähnen und den Vertiefungen zum Satinieren teilweise mit einer weiteren Metallschicht (22) versehen ist.

6. Vorrichtung nach einem der Ansprüche 1 bis 5, **dadurch gekennzeichnet, dass** die Walzen mit Justierungsmitteln (12,13;14,15) in der Einrichtphase versehen sind.

7. Vorrichtung nach einem der Ansprüche 1 bis 6, **dadurch gekennzeichnet, dass** die Walzen mit Synchronisationsmitteln (16,17) versehen sind.

## Revendications

1. Dispositif pour satiner et gaufrer des revêtements intérieurs, en particulier pour des produits à base de tabac, alimentaires et pharmaceutiques, comprenant un cylindre (18) avec une configuration en relief de dents (2) et un cylindre (19) avec une configuration en creux de renfoncements (4) correspondants, **caractérisé en ce que** sur un seul des cylindres (18), une partie correspondant à un logo a été travaillée pour former le logo ayant une surface non satinée, tandis que les renfoncements ou les dents de l'autre cylindre (19) ont une forme qui n'a pas été modifiée.

2. Dispositif selon la revendication 1, **caractérisé en ce que** les deux cylindres comprennent une zone (Z1) avec des dents ou des renfoncements de satiner et l'un des cylindres comprend en outre une zone (Z2) avec les parties destinées à gaufrer un logo.

3. Dispositif selon la revendication 1 ou 2, **caractérisé en ce que** la zone (Z2) avec les parties destinées à gaufrer un logo est dotée de la couche métallique (21).

4. Dispositif selon l'une des revendications 1 à 3, **caractérisé en ce que** la zone (Z2) avec les parties destinées à gaufrer un logo et la zone sur le cylindre extérieur correspondant au logo sont dotées de la couche métallique (20, 21).

5. Dispositif selon l'une des revendications 1 à 4, **caractérisé en ce que** ladite zone (Z1) avec les dents et les renfoncements pour satiner est partiellement dotée d'une autre couche métallique (22).

6. Dispositif selon l'une des revendications 1 à 5, **caractérisé en ce que** les cylindres sont dotés de moyens d'ajustement (12, 13 ; 14, 15) pendant la phase de montage.

7. Dispositif selon l'une des revendications 1 à 6, **caractérisé en ce que** les cylindres sont dotés de moyens de synchronisation (16, 17).
